# DEMANDE DE BREVET EUROPEEN

(11) **EP 1 544 171 A1**
(43) Date de publication de la demande: **22.06.2005**
(21) Numéro de dépôt: 04300845.7
(22) Date de dépôt: 03.12.2004
(51) Int. Cl.: C02F 3/12, C02F 11/00

(54) **Procédé de réduction de boues issues du traitement d'eaux usées par oxygénation et action mécanique**

(30) Priorité: 17.12.2003 FR 0351087
(71) Demandeur: L'AIR LIQUIDE S.A., 75321 Paris Cédex 07 (FR)
(72) Inventeur: Campo, Philippe, 78180, Montigny le Bretonneux (FR); Cluzeau, Jérôme, 78000, VERSAILLES (FR)
(74) Mandataire: Ducreux, Marie

(57) **Abrégé**

L'invention concerne un procédé de réduction de la production de boues issues du traitement d'eaux usées, dans lequel on soumet les boues à une action mécanique en présence d'un gaz comprenant de l'oxygène, l'action mécanique étant mise en oeuvre de manière à ce qu'elle détruise les parois cellulaires de 5 à 80 % en poids des microorganismes présents dans les boues.

## Description

La présente invention concerne un procédé de réduction des boues issues d'une unité de traitement d'eaux usées.

Les traitements biologiques aérobie d'effluents consistent généralement à mettre en contact ces effluents avec une biomasse (micro-organismes) qui dégrade la pollution contenue dans ceux-ci en transformant les molécules organiques en minéraux : il s'agit de l'étape appelée communément aération des bassins biologiques. La mise en oeuvre de tels traitements conduit à une augmentation progressive de la quantité de biomasse et à la nécessité d'évacuer la biomasse en excès communément appelée "boues en excès". Pour faire face à la quantité sans cesse croissante de ces boues biologiques en excès et de leur évacuation, différentes solutions ont été proposées.

Une première famille de procédés consiste à soutirer ces boues en excès à l'issue du traitement biologique et soit leur trouver un débouché adapté soit les traiter lors d'une étape spécifique de dégradation. Elles peuvent ainsi être utilisées comme engrais dans l'agriculture (épandage). Toutefois, le respect des normes sur l'environnement et la présence possible de micropolluants ou de métaux lourds dans les boues conduisent à réduire cette utilisation. Une autre solution consiste à soutirer ces boues et à les incinérer ; il faut alors les transporter vers un incinérateur ce qui implique un coût. De plus, les difficultés pour implanter de nouveaux incinérateurs freinent le développement de cette solution. Une autre solution consiste à réaliser une oxydation par voie humide des boues en excès : les boues sont alors minéralisées.

Une seconde famille de procédés consiste à réduire la production de boues au cours du traitement biologique. Ces solutions consistent à utiliser des moyens permettant de réduire la production de boues au cours du processus biologique de dépollution des eaux. Ces solutions consistent à réaliser une lyse partielle les boues, c'est-à-dire détruire une partie des micro-organismes qui composent les boues en les rendant partiellement solubles. Les produits issus de cette lyse qui contiennent des composés organiques au moins partiellement solubles peuvent alors être renvoyés en tête du traitement d'effluents pour subir le traitement biologique, au cours duquel les micro-organismes vont traiter les produits issus de la lyse. Une première technique de lyse connue consiste à exercer une action mécanique sur les boues provenant du bassin de traitement biologique ce qui provoque l'éclatement d'une partie des cellules des micro-organismes constituant les boues en excès. Il peut s'agir d'un broyage mécanique, de technique de compression/détente, de sonochimie,... Cette technique est généralement simple à mettre en oeuvre mais présente l'inconvénient de ne réduire que faiblement la production des boues en excès. Une deuxième technique de lyse est une attaque basique ou acide à l'aide d'agents chimiques éventuellement couplée à une élévation de température, mais cette technique nécessite le réajustement du pH de la solution obtenue avant sa réinjection dans le bassin d'aération. L'inconvénient de cette solution est qu'elle augmente la salinité des boues hydrolysées ce qui peut conduire à un dysfonctionnement de l'étape de traitement biologique. Une troisième technique de lyse est basée sur l'action d'agents oxydants tels que : l'ozone, l'air, l'eau de javel, le peroxyde d'hydrogène ou l'oxygène sous pression. L'inconvénient de l'air, du peroxyde d'hydrogène et de l'oxygène est qu'ils ne sont pas assez efficaces seuls : ils doivent être associés à un chauffage et/ou un catalyseur, ce qui augmente également le coût de ces techniques. Le document US 4,269,714 décrit un procédé de traitement biologique mettant en oeuvre une micronisation des effluents et une oxydation assurant à la fois le traitement de la boue en un temps réduit et une réduction de la boue produite. La micronisation doit être mise en oeuvre de manière à éviter la destruction des parois des cellules des micro-organismes, la micronisation n'ayant pour objectif que d'augmenter la surface active des flocs en en séparant ses différents constituants.

Le but de la présente invention est de proposer un nouveau procédé de réduction de la production de boues issues du traitement d'eaux usées.

Dans ce but, l'invention concerne un procédé de réduction de la production de boues issues du traitement d'eaux usées, dans lequel on soumet les boues à une action mécanique en présence d'un gaz comprenant de l'oxygène, l'action mécanique étant mise en oeuvre de manière à ce qu'elle détruise des parois cellulaires de 5 à 80 % en poids, de préférence 10 à 30 % en poids, des micro-organismes présents dans les boues. L'invention consiste donc en une combinaison de deux moyens de traitement: l'un étant un traitement mécanique des boues afin d'en réaliser une lyse partielle et l'autre étant la mise en contact des effluents et des boues partiellement détruites mécaniquement avec un gaz comprenant de l'oxygène afin d'augmenter la cinétique d'assimilation de la pollution présente et générée. Une condition essentielle pour obtenir la réduction des boues est de ne détruire les parois cellulaires que d'une partie des micro-organismes, la destruction totale ou la simple oxygénation des flocs de micro-organismes sans destruction des parois cellulaires ne permettant pas d'atteindre le but fixé par la présente invention. L'invention fixe le taux de destruction assurant les meilleurs résultats en terme de réduction des boues.

L'action mécanique peut être choisie parmi les traitements suivants : le broyage, la sonochimie, l'enchaînement d'une compression et d'une détente. Le broyage peut consister à écraser les micro-organismes entre deux surfaces, par exemple par entre deux disques très faiblement espacés. De par la conception de ses éléments tournants, une pompe peut réaliser partiellement ou totalement cette action mécanique. La sonochimie consiste à appliquer des micro-ondes aux micro-organismes. L'enchaînement d'une compression puis d'une détente des boues contenues dans un flux permet également de créer une action mécanique sur les boues.

Plus particulièrement, l'action mécanique peut être obtenue par l'association d'une pompe et d'au moins un dispositif générant une contrainte mécanique. Le dispositif générant une action mécanique peut être choisi parmi un venturi, un hydroéjecteur, un obstacle à l'écoulement tel qu'un pincement de la canalisation dans laquelle circule l'effluent ou les boues ou un obstacle que l'écoulement d'effluent ou de boues vient percuter. La pompe assure également une contrainte mécanique. Selon un mode avantageux, la pompe induit une pression d'au moins 2 bars absolus.

Le gaz comprenant de l'oxygène présente généralement une teneur en oxygène d'au moins 25 % en volume, de préférence d'au moins 80 % en volume. Selon le mode préféré, le gaz comprenant de l'oxygène est de l'oxygène pur. Selon un mode particulièrement avantageux, le gaz comprenant de l'oxygène présente une pression d'au moins 1 bar relatif.

Le procédé selon l'invention peut être mis en oeuvre sur une unité de traitement des eaux usées comprenant une ligne de séparation des boues produites vers un clarificateur ou flotateur et une ligne de recyclage des boues du clarificateur vers le bassin d'aération de l'unité de traitement des eaux usées, l'action mécanique en présence du gaz comprenant de l'oxygène étant mise en oeuvre sur les boues de la ligne de recyclage.

Le procédé peut également être mis en oeuvre dans le bassin d'aération d'une unité de traitement des eaux usées.

Le procédé peut être mis en oeuvre à une température comprise entre 10 et 70°C, de préférence comprise entre 15 et 40°C.

## Revendications

1. Procédé de réduction de la production de boues issues du traitement d'eaux usées, **caractérisé en ce qu'**on soumet les boues à une action mécanique en présence d'un gaz comprenant de l'oxygène, l'action mécanique étant mise en oeuvre de manière à ce qu'elle détruise les parois cellulaires de 5 à 80 % en poids des micro-organismes présents dans les boues.

2. Procédé selon la revendication 1, **caractérisé en ce que** l'action mécanique détruit les parois cellulaires de 10 à 30 % en poids des micro-organismes présents dans les boues.

3. Procédé selon l'une des revendications précédentes, **caractérisé en ce que** l'action mécanique est choisie parmi les traitements suivants : le broyage, la sonochimie, l'enchaînement d'une compression et d'une détente.

4. Procédé selon l'une des revendications précédentes, **caractérisé en ce que** l'action mécanique est obtenue par l'association d'une pompe et d'au moins un dispositif générant une contrainte mécanique.

5. Procédé selon la revendication 4, **caractérisé en ce que** la pompe induit une pression d'au moins 2 bar absolus.

6. Procédé selon la revendication 4 ou 5, **caractérisé en ce que** le dispositif générant une contrainte mécanique est choisi parmi : un venturi, un hydroéjecteur, un obstacle à l'écoulement.

7. Procédé selon l'une des revendications précédentes, **caractérisé en ce que** le gaz comprenant de l'oxygène présente une teneur en oxygène d'au moins 25 % en volume, de préférence d'au moins 80 % en volume.

8. Procédé selon la revendication précédente, **caractérisé en ce que** le gaz comprenant de l'oxygène est de l'oxygène pur.

9. Procédé selon la revendication 7 ou 8, **caractérisé en ce que** le gaz comprenant de l'oxygène présente une pression d'au moins 1 bar absolu.

10. Procédé selon l'une des revendications précédentes, **caractérisé en ce qu'**il est mis en oeuvre sur une unité de traitement des eaux usées comprenant une ligne d'évacuation des boues produites vers un clarificateur ou un flotateur et une ligne de recyclage des boues du clarificateur ou flotateur vers le bassin d'aération de l'unité de traitement des eaux usées et **en ce que** l'action mécanique en présence d'un gaz comprenant de l'oxygène est mise en oeuvre sur les boues de la ligne de recyclage.

11. Procédé selon l'une des revendications 1 à 9, **caractérisé en ce qu'**il est mis en oeuvre dans le bassin d'aération d'une unité de traitement des eaux usées.

12. Procédé selon l'une des revendications précédentes, **caractérisé en ce qu'**il est mis en oeuvre à une température comprise entre 10 et 70°C.
